(19) **Europäisches Patentamt** / **European Patent Office** / **Office européen des brevets**

(11) **EP 4 209 402 A1**

(12) # EUROPEAN PATENT APPLICATION
published in accordance with Art. 153(4) EPC

(43) Date of publication:
**12.07.2023 Bulletin 2023/28**

(21) Application number: **21879322.2**

(22) Date of filing: **11.10.2021**

(51) International Patent Classification (IPC):
**B61C 15/00** (2006.01)      **B60L 15/20** (2006.01)

(52) Cooperative Patent Classification (CPC):
**Y02T 10/72**

(86) International application number:
**PCT/CN2021/123003**

(87) International publication number:
**WO 2022/078278 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.10.2020 CN 202011088552**

(71) Applicant: **CRRC Zhuzhou Locomotive Co., Ltd.**
**Zhuzhou, Hunan 412001 (CN)**

(72) Inventors:
• **LIAO, Hongtao**
**Zhuzhou, Hunan 412001 (CN)**

• **PENG, Xinping**
**Zhuzhou, Hunan 412001 (CN)**
• **QIN, Qingmin**
**Zhuzhou, Hunan 412001 (CN)**
• **HE, Xiaowei**
**Zhuzhou, Hunan 412001 (CN)**
• **CHEN, Yong**
**Zhuzhou, Hunan 412001 (CN)**
• **WANG, Lei**
**Zhuzhou, Hunan 412001 (CN)**

(74) Representative: **Kramer Barske Schmidtchen Patentanwälte PartG mbB**
**European Patent Attorneys**
**Landsberger Strasse 300**
**80687 München (DE)**

(54) **CONTROL METHOD AND CONTROL DEVICE FOR DEGRADED OPERATION OF LOCOMOTIVE, AND LOCOMOTIVE**

(57)    A control method and control device for degraded operation of a locomotive, and a locomotive are provided. The control method for degraded operation of a locomotive includes the following steps: step 1: when a power source of a locomotive fails, calculating a sum of available power of all power sources, $P\_total=P1+P_2+...+P_k$; step 2: defining k as an efficiency coefficient of the locomotive, $P\_a$ as fixed load power of the locomotive, and $P\_b$ as a power safety margin, and calculating first traction force when a current speed of the locomotive is v by using the following equation: $F_v'=k*(P\_total-P\_a-P\_b)/v$; and step 3: comparing $F_v'$ with $F_v$, and taking the smaller value as maximum available traction force when the current speed of the locomotive is

Step 1: Calculate a sum of available power of all power sources $P\_total=P1+P2+ ... +Pk$ when a power source fails, where Pi is available power of the ith power source when the power source fails, and i=1, 2, …, K

↓

Step 2: Define k as an efficiency coefficient of the locomotive, $P\_a$ as fixed load power of the locomotive, and $P\_b$ as a power safety margin, and calculate first traction force when the current speed of the locomotive is v by using the following equation: $Fv'=k*(P\_total-P\_a-P\_b)/v$

↓

Step 3: Compare Fv' with Fv, and take the smaller value as the maximum available traction force when the current speed of the locomotive is v

Fig.1

**Description**

**Field of the Invention**

The present invention relates to a control method and control device for degraded operation of a locomotive, and a locomotive, belonging to the field of rail transit.

**Background of the Invention**

In a current locomotive, availability of traction force is limited by an initial traction force characteristic curve. A horizontal axis of the traction force characteristic curve represents a locomotive speed, and a longitudinal axis represents available traction force. At a speed, the available traction force of the locomotive should not exceed available traction force corresponding to the speed in the traction force characteristic curve. When a component of the locomotive fails or operates in a degraded mode, the degraded operation is often implemented by reducing traction power/traction force in the whole traction force curve. For example, if available power of a power source becomes 50% of the original after the power source fails, the traction force of the locomotive also becomes 50% of the original, that is, traction force of 180 kN can be exerted at a normal low speed, but only 90 kN can be exerted after degraded. As a result, the whole locomotive does not have enough traction force. In the presence of a rear heavy load or a slope, it will be difficult to output large traction force, which will affect the operation of the locomotive.

**Summary of the Invention**

A problem to be solved by the present invention is to provide a control method and control device for degraded operation of a locomotive, and a locomotive, aiming at a problem in the prior art that insufficient traction force is exerted during degraded operation of a locomotive due to power source failure, which will affect the operation of locomotive.
To solve the foregoing technical problem, a technical solution used by the present invention is as follows: A control method for degraded operation of a locomotive, the locomotive includes K power sources which provide power for locomotive traction, K≥1, and when K≥2, the K power sources are connected in parallel to each other; maximum available traction force when a current speed of the locomotive is v is defined as $F_v$ in an initial traction force characteristic curve of the locomotive; and the control method for operation of a locomotive includes the following steps:

> step 1: calculating a sum of available power of all power sources $P\_total=P_1+P_2+ ... +P_k$ when a power source fails, where $P_i$ is available power of the $i^{th}$ power source when the power source fails, and i=1, 2, ..., K;
> step 2: defining k as an efficiency coefficient of the locomotive, P_a as fixed load power of the locomotive, and P_b as a power safety margin, and calculating first traction force when the current speed of the locomotive is v by using the following equation:

$$F_v'=k*(P\_total-P\_a-P\_b)/v;$$

> and
> step 3: comparing $F_v'$ with $F_v$, and taking the smaller value as the maximum available traction force when the current speed of the locomotive is v.

In the present invention, if it is determined that a locomotive fails and a failure type is power source failure, first traction force when the current speed of the locomotive is v is calculated according to a sum of available power of all power sources, an efficiency coefficient of the locomotive, fixed load power of the locomotive, and a power safety margin, the first traction force is compared with a traction force value corresponding to the speed v of the locomotive in a locomotive traction force characteristic curve, and the smaller value is taken as maximum available traction force when the current speed of the locomotive is v. Compared with a scheme in the prior art that a percentage of maximum available traction force change is determined according to a percentage of available power change before and after a power source fails, the present invention can still exert relatively large traction force of a locomotive in a power source degrading mode (that is, a power source fails and maximum power cannot be exerted), thereby minimizing the influence of power source failure on locomotive operation and significantly improving usability of the locomotive.
If the $i^{th}$ power source fails, the available power of the $i^{th}$ power source is $P_i=a_i \times Ini\_P_i$, where $a_i$ is a percentage coefficient set when the $i^{th}$ power source fails, and $Ini\_P_i$ is initial available power of the $i^{th}$ power source.
In the foregoing technical solution, the K power sources are one kind of or a combination of diesel engines, traction batteries, and super-capacitors.

In the foregoing technical solution, a value range of k is 0.5≤k≤l.

In the foregoing technical solution, the failure of the power source includes over-temperature failure, low temperature failure, low capacity failure, over-voltage failure, and under-voltage failure.

The present invention further provides a control device for degraded operation of a locomotive, the locomotive includes K power sources which provide power for locomotive traction, K≥1, and when K≥2, the K power sources are connected in parallel to each other; k is defined as an efficiency coefficient of the locomotive, $P\_a$ is fixed load power of the locomotive, $P\_b$ is a power safety margin, and maximum available traction force when a current speed of the locomotive is v is defined as $F_v$ in an initial traction force characteristic curve of thelocomotive; and the control device for operation of a locomotive includes:

a processing module, configured to calculate a sum of available power of all power sources $P\_total=P_1+P_2+ \ldots +P_k$ when a power source fails, and calculate first traction force $F_v'=k*(P\_{total}-P\_a-P\_b)/v$ when the current speed of the locomotive is v, where $P_i$ is available power of the $i^{th}$ power source when the power source of the locomotive fails, and i=1, 2, ..., K; and

a comparison module, configured to compare $F_v'$ with $F_v$, and take the smaller value as the maximum available traction force when the current speed of the locomotive is v. The present invention provides a locomotive, including the foregoing control device for degraded operation of a locomotive.

The present invention has the following advantages and positive effects: Available power of a locomotive is calculated based on available power of power sources, a power exertion curve is adjusted, and traction force of the vehicle is dynamically calculated. The control method for degraded operation, used in the present invention, enables the locomotive to exert large traction force in a limited energy degraded mode, and to output the large traction force in a case of energy degradation, thereby significantly improving usability of the locomotive.

**Brief Description of the Drawings**

In order to describe the technical solutions in the embodiments of the present application more clearly, the following briefly introduces the accompanying drawings required to describe the embodiments. Apparently, the accompanying drawings in the following description show only some embodiments of the present application, and those of ordinary skill in the art may still derive other drawings from these drawings without any creative efforts.

FIG. 1 is a schematic diagram of steps of a control method for degraded operation of a locomotive according to the present invention; and

FIG. 2 is a schematic diagram of comparison among an initial traction force characteristic curve of a locomotive in the present invention, a traction force characteristic curve after a power source fails in the prior art, and a traction force characteristic curve optimized by a control method for degraded operation of a locomotive in the present invention.

**Detailed Description of the Embodiments**

The following clearly and completely describes the technical solutions in the embodiments of the present application with reference to the accompanying drawings in the present application. Apparently, the described embodiments are only some of, not all of the embodiments of the present application. All other embodiments obtained by a person of ordinary skill in the art based on the embodiments of this application without creative efforts shall fall within the protection scope of this application.

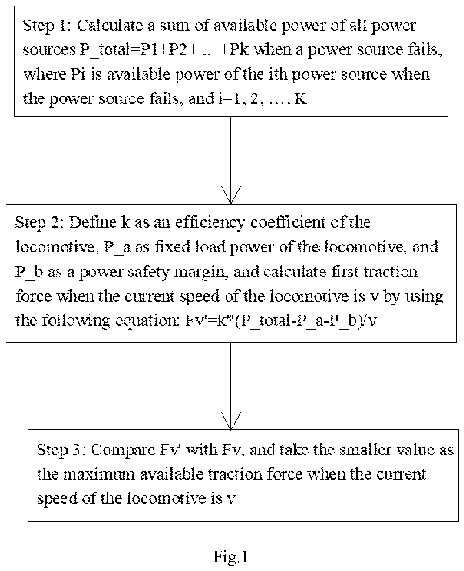

As shown in FIG. 1, the present invention provides a control method for degraded operation of a locomotive, the locomotive includes K power sources which provide power for locomotive traction, K≥1, and when K≥2, the K power sources are connected in parallel to each other; maximum available traction force when a current speed of the locomotive is v is defined as $F_v$ in an initial traction force characteristic curve of the locomotive; and the control method for operation of a locomotive includes the following steps:

Step 1: Calculate a sum of available power of all power sources $P\_total=P_1+P_2+ \ldots +P_k$ when a power source fails, where $P_i$ is available power of the $i^{th}$ power source when the power source fails, and i=1, 2, ..., K. Here, P_total refers to the sum of available power of all the power sources when the power source fails.

Step 2: Define k as an efficiency coefficient of the locomotive, $P\_a$ as fixed load power of the locomotive, and $P\_b$ as a power safety margin, and calculate first traction force when the current speed of the locomotive is v by using the following equation:

$$F_v'=k*(P\_total-P\_a-P\_b)/v.$$

In step 2, available power and traction force values that the locomotive can exert at different speed classes are calculated. That is:

Available traction power = available power of power source 1 + available power of

power source 2 + ... – fixed load power – safety margin.

Step 3: Compare $F_v'$ with $F_v$, and take the smaller value as the maximum available traction force when the current speed of the locomotive is v. According to the control method for degraded operation in the present invention, at the current speed v, a maximum set value of actualavailable traction force exerted by the locomotive is a minimum value in the first traction force $F_v'$ and the traction force value $F_v$ of the initial traction force characteristic curve at the current speed v.

If the $i^{th}$ power source fails, the available power of the $i^{th}$ power source is $P_i=a_i \times Ini\_P_i$, where $a_i$ is a percentage coefficient set when the $i^{th}$ power source fails, and $Ini\_P_i$ is initial available power of the $i^{th}$ power source. If the $i^{th}$ power source does not fail, the available power $P_i$ of the $i^{th}$ power source is the same as its initial available power $Ini\_P_i$.

The K power sources are one kind of or a combination of diesel engines, traction batteries, and super-capacitors. That is, the K power sources may be all diesel engines, all traction batteries, or all super-capacitors, or any combination of two or three kinds of diesel engines, traction batteries, and super-capacitors.

A value range of the efficiency coefficient k of the locomotive is $0.5 \leq k \leq l$.

The failure of the power source includes over-temperature failure, low temperature failure, low capacity failure, over-voltage failure, and under-voltage failure. Over-temperature and low temperature may be collected by a sensor, and a controller in the power source determines whether failure occurs, and determines a level of power reduction of the power source. Low capacity generally refers to low battery power, diesel engine fuel capacity, super-capacitor power, or the like, a protection value may be set, and when the capacity is lower than the protection value of the capacity, power of the power source is reduced.

In the present invention, the failure of the power source may indicate failure of one power source or failure of a plurality of power sources. If a plurality of power sources fails, the failure of different power sources may be different or the same.

When a power source fails, a system where the power source is located (for example, a diesel engine module, a battery module, or a super-capacitor module) determines a percentage of degradation (namely, available power reduction of the power source), which belongs to content of the prior art and can be understood by those skilled in the art.

The present invention further provides a control device for degraded operation of a locomotive, the locomotive includes K power sources which provide power for locomotive traction, $K \geq 1$, and when $K \geq 2$, the K power sources are connected in parallel to each other; k is defined as an efficiency coefficient of the locomotive, $P\_a$ is fixed load power of the locomotive, $P\_b$ is a power safety margin, and maximum available traction force when a current speed of the locomotive is v is defined as $F_v$ in an initial traction force characteristic curve of thelocomotive; and the control device for operation of a locomotive includes:

a processing module, configured to calculate a sum of available power of all power sources $P\_total=P_1+P_2+ ... +P_k$ when a power source fails, and calculate first traction force $F_v'=k*(P\_total-P\_a-P\_b)/v$ when the current speed of the locomotive is v, where $P_i$ is available power of the $i^{th}$ power source when the power source fails, and i=1, 2, ..., K; and

a comparison module, configured to compare $F_v'$ with $F_v$, and take the smaller value as the maximum available traction force when the current speed of the locomotive is v.

The processing module and the comparison module may be implemented in a controller of the locomotive.

The present invention further provides a locomotive, including the foregoing control device for degraded operation of a locomotive.

In the present invention, a failure mode may be subdivided, and after subdivision, a degraded mode limited by energy supply may be optimized on original basis, so that the locomotive operating in the degraded mode can still provide original traction force, the locomotive can still operate with a relatively large load, and usability of the locomotive can be greatly improved.

In the present invention, limited energy is the power source. A failure form of the limited energy may be any failure that affects exertion of an original energy unit, such as over-temperature, low temperature, and low capacity.

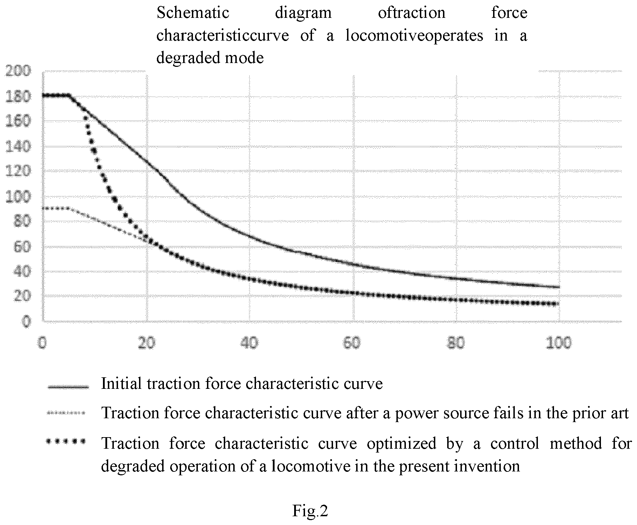

After failure occurs, different failure is evaluated, and power output is limited in different ways to maintain the operation and protect against a wider range of failure. An optimized traction curve is shown in FIG. 2. Especially when the speed of the locomotive is relatively low, the maximum available traction force obtained by the control method for degraded operation of a locomotive in the present invention is obviously better than that when a power source fails in the prior art.

The present invention provides a control method for degraded operation, which can solve a problem of adaptive matching between a power pack and an energy storage element in hybrid power by calculating available power of a locomotive based on available power of power sources, adjusting a traction force characteristic curve, and dynamically calculating traction force of the locomotive. The method is suitable for a case of limited energy. The limited energy refers to typical energy with maximum exertion power. When energy exceeds an allowable value, a system of the limited energy may have unstable supply, failure may be aggravated, or the like. For example, limited energy power supply operation modes, such as diesel engine power supply, battery power supply, hybrid power supply, and super-capacitor power supply, may be included.

For example, as shown in Table 1, it is assumed that power of power source 1 is limited to 300 kW, which is 60% of the original due to over-temperature failure, power of power source 2 is limited to 150 kW, which is 50% of the original due to capacity failure, fixed load power is 50 kW, a power safety margin is 25 kW, and available power is 375 kW. When the speed of the locomotive is 20 km/h, the corresponding maximum traction force is 128 kN according to the initial traction force characteristic curve, and after degradation, according to the method in the prior art, an adjusted percentage of the maximum available traction force value is 50%, that is, the maximum available traction force value becomes 64 kN; and according to the control method for operation of a locomotive in the present invention, the maximum available traction force when the current speed of the optimized locomotive is 20 km/h is 68 kN after optimization. When the speed of the locomotive is 10 km/h, the corresponding maximum traction force is 163 kN according to the initial traction force characteristic curve; and after degradation, according to the method in the prior art, an adjusted percentage of the maximum available traction force value is also 50%, that is, the maximum available traction force value becomes 81.5 kN; and according to the control method for operation of a locomotive in the present invention, the maximum available traction force when the current speed of the locomotive is 10 km/h is 135 kN after optimization. When the speed of the locomotive is 7 km/h, the corresponding maximum traction force is 170 kN according to the initial traction force characteristic curve, and after degradation, according to the method in the prior art, an adjusted percentage of the maximum available traction force value is also 50%, that is, the maximum available traction force value becomes 85 kN; and according to the control method for operation of a locomotive in the present invention, the maximum available traction force when the current speed of the locomotive is 7 km/h is 170 kN.

Table 1

|  | Maximum available traction force when no failure occurs | Maximum available traction force obtained by the degradation method in the prior art after a power source fails | Maximum available traction force obtained after optimization by the control method for degraded operation of a locomotive in the present invention |
| --- | --- | --- | --- |
| Speed of locomotive 20 km/h | 128 kN | 64 kN | 68 kN |
| Speed of locomotive 10 km/h | 163 kN | 81.5 kN | 135 kN |
| Speed of locomotive 7 km/h | 170 kN | 85 kN | 170 kN |

It can be seen that traction force can be controlled to exert closer to the original curve at a lower speed. Therefore, locomotives and shunting locomotives can still exert relatively large traction force in cases of limited energy, thereby improving usability of locomotives.

In the present application, the limited energy refers to energy which has limited power and cannot satisfy original set power in a case of failure, for example, limited energy power supply operation modes, such as diesel engine power supply, battery power supply, hybrid power supply, and super-capacitor power supply.

In the present application, the maximum availabletraction force mentioned above is an actual maximum traction force set value of the locomotive, and a driver can control the locomotive to operate with desired traction force within the maximumtraction force set value.

It should be noted that the embodiments in this specification are all described in a progressive manner, with each embodiment focusing what is different from other embodiments. For same or similar parts in the embodiments, mutual reference may be made.

The embodiments of the present invention are described in detail above, but the descriptions are merely preferred embodiments of the present invention and cannot be regarded as limiting the scope of the present invention. All changes, improvements, and the like made in accordance with the scope of the present invention shall still fall within the scope of this patent. Various equivalent modifications made to the present invention by those skilled in the art after reading the present invention all fall within the scope defined by the appended claims of the present application. The embodiments in the present invention and the features in the embodiments can be combined with each other without conflicts.

**Claims**

1. A control method for degraded operation of a locomotive, wherein the locomotive comprises K power sources which provide power for locomotive traction, $K \geq 1$, and when $K \geq 2$, the K power sources are connected in parallel to each other; maximum availabletraction force when a current speed of the locomotive is v is defined as $F_v$ in an initial traction force characteristic curve of thelocomotive; and the control method for operation of a locomotive comprises the following steps:

   step 1: calculating a sum of available power of all power sources $P\_total = P_1 + P_2 + ... + P_k$ when a power source fails, wherein $P_i$ is available power of the $i^{th}$ power source when the power source fails, and i=1, 2, ..., K;
   step 2: defining k as an efficiency coefficient of the locomotive, P_a as fixed load power of the locomotive, and P_b as a power safety margin, and calculating first traction force when the current speed of the locomotive is v by using the following equation: $F_v' = k*(P\_total - P\_a - P\_b)/v$; and
   step 3: comparing $F_v'$ with $F_v$, and taking the smaller value as the maximum available traction force when the current speed of the locomotive is v.

2. The control method for degraded operation of a locomotive according to claim 1, wherein if the $i^{th}$ power source fails, the available power of the $i^{th}$ power source is $P_i = a_i \times Ini\_P_i$, wherein $a_i$ is a percentage coefficient set when the $i^{th}$ power source fails, and $Ini\_P_i$ is initial available power of the $i^{th}$ power source.

3. The control method for degraded operation of a locomotive according to claim 1, wherein theK power sources are one kind of or a combination of diesel engines, traction batteries, and super-capacitors.

4. The control method for degraded operation of a locomotive according to claim 1, wherein a value range of k is $0.5 \leq k \leq 1$.

5. The control method for degraded operation of a locomotive according to claim 1, wherein the failure of the power source comprises over-temperature failure, low temperature failure, low capacity failure, over-voltage failure, and under-voltage failure.

6. A control device for degraded operation of a locomotive, the locomotive includes K power sources which provide power for locomotive traction, $K \geq 1$, and when $K \geq 2$, the K power sources are connected in parallel to each other; k is defined as an efficiency coefficient of the locomotive, P_a is fixed load power of the locomotive, P_b is a power safety margin, and maximum available traction force when a current speed of the locomotive is v is defined as $F_v$ in an initial traction force characteristic curve of thelocomotive; wherein the control device for operation of a locomotive comprises:

   a processing module, configured to calculate a sum of available power of all power sources $P\_total = P_1 + P_2 + ... + P_k$ when a power source fails, and calculate first traction force $F_v' = k*(P\_total - P\_a - P\_b)/v$ when the current speed of the locomotive is v, where $P_i$ is available power of the $i^{th}$ power source when the power source fails, and i=1, 2, ..., K; and
   a comparison module, configured to compare $F_v'$ with $F_v$, and take the smaller value as the maximum available traction force when the current speed of the locomotive is v.

7. A locomotive, comprising the control device for degraded operation of a locomotive according to claim 6.

Step 1: Calculate a sum of available power of all power sources P_total=P1+P2+ ... +Pk when a power source fails, where Pi is available power of the ith power source when the power source fails, and i=1, 2, ..., K

Step 2: Define k as an efficiency coefficient of the locomotive, P_a as fixed load power of the locomotive, and P_b as a power safety margin, and calculate first traction force when the current speed of the locomotive is v by using the following equation: Fv'=k*(P_total-P_a-P_b)/v

Step 3: Compare Fv' with Fv, and take the smaller value as the maximum available traction force when the current speed of the locomotive is v

Fig.1

Schematic diagram oftraction force characteristiccurve of a locomotiveoperates in a degraded mode

_____ Initial traction force characteristic curve

........ Traction force characteristic curve after a power source fails in the prior art

★ ★ ★ ★ Traction force characteristic curve optimized by a control method for degraded operation of a locomotive in the present invention

Fig.2

## INTERNATIONAL SEARCH REPORT

| | International application No. |
|---|---|
| | **PCT/CN2021/123003** |

**A.  CLASSIFICATION OF SUBJECT MATTER**

B61C 15/00(2006.01)i;  B60L 15/20(2006.01)i

According to International Patent Classification (IPC) or to both national classification and IPC

**B.  FIELDS SEARCHED**

Minimum documentation searched (classification system followed by classification symbols)

B61C B60L

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: 株洲电力机车, 廖洪涛, 机车, 牵引力, 动力源, 功率, 计算, 控制, 故障, 降级, 运行, 速度, 裕量, 裕度, locomotive+, tracti+, haul+, draw+, force, power, calculat+, comput+, control+, failure, fault, bug, degrad+, reduc+, speed, velocity, margin?, surplus

**C.  DOCUMENTS CONSIDERED TO BE RELEVANT**

| Category* | Citation of document, with indication, where appropriate, of the relevant passages | Relevant to claim No. |
|---|---|---|
| PX | CN 112172846 A (CRRC ZHUZHOU LOCOMOTIVE CO., LTD.) 05 January 2021 (2021-01-05)<br>    claims 1-7 | 1-7 |
| X | CN 110549868 A (SOUTHWEST JIAOTONG UNIVERSITY) 10 December 2019 (2019-12-10)<br>    description, paragraphs [0033]-[0097], and figures 1-5 | 1-7 |
| A | JP 2013115987 A (RAILWAY TECHNICAL RESEARCH INSTITUTE) 10 June 2013 (2013-06-10)<br>    entire document | 1-7 |
| A | CN 109829259 A (CRRC ZIYANG CO., LTD.) 31 May 2019 (2019-05-31)<br>    entire document | 1-7 |
| A | CN 105253032 A (BEIJING INSTITUTE OF SPACE LAUNCH TECHNOLOGY et al.) 20 January 2016 (2016-01-20)<br>    entire document | 1-7 |

☑ Further documents are listed in the continuation of Box C.          ☑ See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **03 November 2021** | **04 January 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2021/123003** |

**C.    DOCUMENTS CONSIDERED TO BE RELEVANT**

| Category* | Citation of document, with indication, where appropriate, of the relevant passages | Relevant to claim No. |
|---|---|---|
| A | CN 109591613 A (ZHUZHOU CRRC TIMES ELECTRIC CO., LTD.) 09 April 2019 (2019-04-09)<br>    entire document | 1-7 |

Form PCT/ISA/210 (second sheet) (January 2015)

**INTERNATIONAL SEARCH REPORT**
Information on patent family members

International application No.

**PCT/CN2021/123003**

| Patent document cited in search report | | | Publication date (day/month/year) | Patent family member(s) | | | Publication date (day/month/year) |
|---|---|---|---|---|---|---|---|
| CN | 112172846 | A | 05 January 2021 | None | | | |
| CN | 110549868 | A | 10 December 2019 | None | | | |
| JP | 2013115987 | A | 10 June 2013 | JP | 5731365 | B2 | 10 June 2015 |
| CN | 109829259 | A | 31 May 2019 | None | | | |
| CN | 105253032 | A | 20 January 2016 | CN | 105253032 | B | 29 August 2017 |
| CN | 109591613 | A | 09 April 2019 | CN | 109591613 | B | 10 November 2020 |

Form PCT/ISA/210 (patent family annex) (January 2015)